# EUROPEAN PATENT APPLICATION

(11) **EP 4 847 322 A2**
(43) Date of publication of application: **02.12.2026**
(21) Application number: 26177069.7
(22) Date of filing: 07.05.2026
(51) Int. Cl.: B60R 13/04

(54) **AN EDGE PROTECTOR FOR A VEHICLE CLOSURE AND A VEHICLE INCLUDING THE SAME**

(30) Priority: 09.05.2025 KR 20250060516; 31.10.2025 KR 20250162255; 06.05.2026 KR 20260081629
(71) Applicant: Seojin Industrial Co., Ltd., Gunpo-si -Gyeonggi-do 435040 (KR)
(72) Inventor: KIM, Yujeong, 04700 SEOUL (KR); LIM, Junhyuk, 15808 GUNPO-SI GYEONGGI-DO (KR); IN, Gon, 15808 GUNPO-SI GYEONGGI-DO (KR); KIM, Jin Seok, 14033 ANYANG-SI GYEONGGI-DO (KR); PARK, Sang Pil, 15874 GUNPO-SI GYEONGGI-DO (KR)
(74) Representative: ZBM Patents - Zea, Barlocci & Markvardsen

(57) **Abstract**

The present disclosure relates to an edge protector for a vehicle closure, the edge protector being configured to automatically operate as a closure is opened or closed. To this end, the edge protector includes a wire operation part (200) having one end to which a wire (20) for traction is connected, and the other end at which a second connection portion (210) is formed, the wire operation part (200) being configured to perform a rectilinear reciprocation, a link (180) having one end configured to form a first link connection portion (182) connected to the second connection portion (210), and the other end configured to form a second link connection portion (183) connected to a link connection portion (156), a bell crank (150) having a rotation center portion (152), having a traction tool connection portion (154) and the link connection portion (156) formed at a radially outer side of the rotation center portion 152, and having a lateral surface in which a link accommodation groove (158) is formed, a traction tool (140) having one end at which a first connection portion (144) connected to the traction tool connection portion (154) is formed, and the other end at which a head (142) is formed, the traction tool (140) being configured to protrude from a housing (300) when the vehicle closure is opened and configured to return into the housing (300) when the closure is closed, a flap (120) connected to the head (142) and configured to surround a part of an edge (70) of the closure when the traction tool (140) protrudes, and a housing (300) configured to accommodate therein the wire operation part (200) and the traction tool (140) and having a housing protrusion (310) protruding from an inner surface of the housing (300) and configured to be rotatably inserted into the rotation center portion (152).

## Description

### CROSS-REFERENCE TO RELATED APPLICATIONS

This application claims the priority of Korean Patent Application No. 10-2025-0060516 filed on May 9, 2025, No. 10-2025-0162255 filed on October 31, 2025, and No. 10-2026-0081629 filed on May 6, 2026, in the Korean Intellectual Property Office, the disclosure of which is incorporated herein by reference.

### BACKGROUND

### Field

The present disclosure relates to an edge protector for a vehicle closure, and more particularly, to an edge protector for a vehicle closure, the edge protector being configured to automatically operate as the vehicle closure is opened or closed, and a vehicle including the same.

### Description of the Related Art

In general, when a door is opened or closed after a vehicle is parked, the door often comes into contact with another object, such as another vehicle parked nearby, a column, or a wall surface, which causes damage to another vehicle or damage to the vehicle having the above-mentioned door. Therefore, most vehicle occupants have the inconvenience of having to always carefully open the vehicle door so that the vehicle door does not come into contact with surrounding vehicles or objects, instead of comfortably opening the vehicle door.

Various vehicle accessory products have been developed and used to prevent damage to the vehicle or the like caused by contact between the door and another vehicle or another object when the door is opened. There is a door guard among the most commonly used accessory products. The door guard is made of a material, such as polyurethane foam, attached to one side of an outer surface of a door by a double-sided tape, and used to prevent damage to another vehicle parked nearby or prevent the door from coming into contact with an object such as a column or a wall surface. However, because the vehicle accessory products are exposed to the outside at all times, there is a problem in that the lifespan of the vehicle accessory products is short, and sticker marks remain on an outer portion of the vehicle.

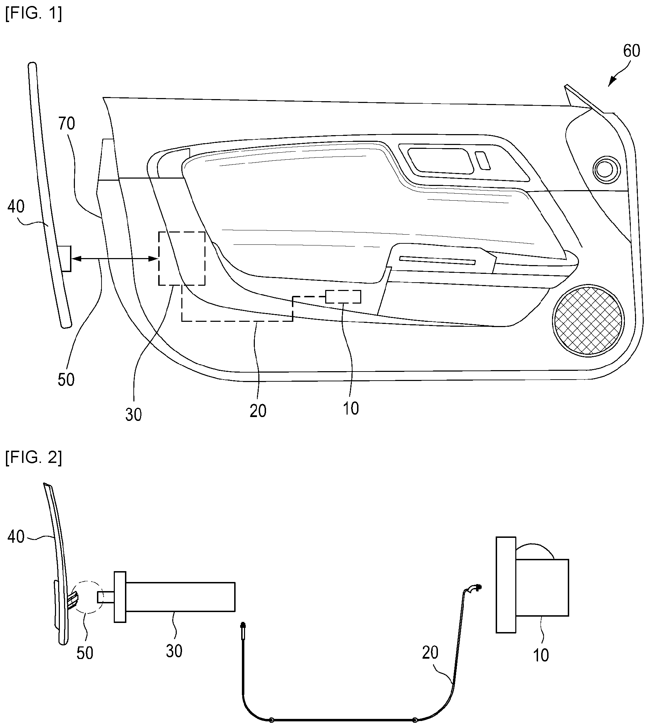

FIG. 1 is a view illustrating examples of general structures of an edge protector 30 and a flap 40 of a vehicle door 60 in the related art, and FIG. 2 is a view simply illustrating a connected state between the edge protector 30 and the flap 40 illustrated in FIG. 1. As illustrated in FIGS. 1 and 2, the edge protector 30 in the related art broadly includes an actuator 10 configured to push or pull a wire 20 as a door 60 is opened or closed, and a protector 30 configured to deploy or return the flap 40 by using the wire 20.

That is, when the door 60 begins to be opened, the actuator 10 pushes the wire 20 by using a force of the door 60, such that the protector 30 allows the flap 40 to protrude in a direction toward a curved outer side. The protruding flap 40 partially surrounds or covers an edge 70 of the door 60 to protect the edge 70 of the door 60. In addition, when the door 60 begins to be closed, the actuator 10 pulls the wire 20 by using a force of the door 60, such that the protector 30 returns the flap 40 inward. Then, the flap 40, which surrounds the edge 70, returns toward an inner panel of the door 60 and maintains integrity with a door panel. Further, in the related art, the protector 30 and the flap 40 are assembled in an interference-fit manner 50.

However, there is a problem in that such an edge protector device in the related art has a complicated internal structure and has durability that is lowered as the door is frequently opened or closed. Therefore, there is a need to develop an edge protector device having high durability while having a simple internal structure.

### [Documents of Related Art]

### [Patent Documents]

1. U.S. Patent No. 10,857,955 B2 (PRESSURE RELIEF VALVE LINKED FOR MOVEMENT WITH DOOR PROTECTOR)
2. U.S. Patent No. 10,711,503 B2 (DOOR PRESENTER, CINCH AND EDGE GUARD ACTUATOR)
3. Korean Patent No. 10-2029871 (VEHICLE DOOR PROTECTOR)
4. Korean Utility Model Application Laid-Open No. 20-1997-0016841 (SIDE PROTECTOR FOR VEHICLE DOOR)

### SUMMARY

The present disclosure has been made in an effort to solve the above-mentioned problems, and an object to be achieved by the present disclosure is to provide an edge protector for a vehicle closure, the edge protector having high durability while having a simple internal structure, and a vehicle including the same.

However, technical problems to be solved by the present disclosure are not limited to the above-mentioned technical problems, and other technical problems, which are not mentioned above, may be clearly understood from the following descriptions by those skilled in the art to which the present disclosure pertains.

In order to achieve the above-mentioned object, a first embodiment of the present disclosure provides an edge protector for a vehicle closure, the edge protector including: a wire operation part (200) having one end to which a wire (20) for traction is connected, and the other end at which a second connection portion (210) is formed, the wire operation part (200) being configured to perform a rectilinear reciprocation; a link (180) having one end configured to form a first link connection portion (182) connected to the second connection portion (210), and the other end configured to form a second link connection portion (183) connected to a link connection portion (156); a bell crank (150) having a rotation center portion (152), having a traction tool connection portion (154) and the link connection portion (156) formed at a radially outer side of the rotation center portion 152, and having a lateral surface in which a link accommodation groove (158) is formed; a traction tool (140) having one end at which a first connection portion (144) connected to the traction tool connection portion (154) is formed, and the other end at which a head (142) is formed, the traction tool (140) being configured to protrude from a housing (300) when the vehicle closure is opened and configured to return into the housing (300) when the closure is closed; a flap (120) connected to the head (142) and configured to surround a part of an edge (70) of the closure when the traction tool (140) protrudes; and a housing (300) configured to accommodate therein the wire operation part (200) and the traction tool (140) and having a housing protrusion (310) protruding from an inner surface of the housing (300) and configured to be rotatably inserted into the rotation center portion (152).

Selectively, the link (180) may be configured to be inserted into the link accommodation groove (158).

Selectively, the link (180) may further include a link groove (185) recessed between the first link connection portion (182) and the second link connection portion (183) so that the link (180) is inserted into the link accommodation groove (158).

Selectively, the traction tool (140) may include: a first bent portion (146) configured to define an obtuse angle between the first connection portion (144) and the head (142); and a second bent portion (147) configured to define another obtuse angle in a direction reverse to the first bent portion (146).

Selectively, the edge protector may further include: a flap protruding portion (130) integrally protruding from the flap (120) and assembled to the head (142), in which the flap protruding portion (130) and the head (142) are separably hook-coupled.

In order to achieve the above-mentioned object, a second embodiment of the present disclosure provides an edge protector for a vehicle closure, the edge protector including: a closure sensor (410) configured to detect whether a vehicle closure is opened or closed; a driving motor (430) configured to operate the flap (120) configured to protect an edge of the closure; and a controller (420) configured to control the driving motor (430) based on an output signal of the closure sensor (410).

Selectively, the closure sensor (410) may detect an opening angle of the closure.

Selectively, the driving motor (430) may be a linear motor or may further include a rack and a pinion to convert a rotational motion of the driving motor (430) into a rectilinear motion.

Selectively, the edge protector may further include: a rod operation part (600) having one end to which the driving motor (430) is connected, the other end at which a pin connection portion (620) is formed, and a middle portion in which a rod groove (610) is formed, the rod operation part (600) being configured to perform a rectilinear reciprocation; a guide rod (500) having one end bent to form a bent portion (540), a guide protrusion (550) formed at one end of the bent portion (540), the other end at which a head (510) to which the flap (120) is connected is provided, a middle region in which a pin hole (520) is formed, and a slit (530) formed from the pin hole (520) to the bent portion (540); a pin (560) fitted in common into the pin hole (520) and the pin connection portion (620); a housing (450) configured to accommodate therein the rod operation part (600), the guide rod (500), and the pin (560); and a guide groove (466) formed in an inner surface of the housing (450) and having one end recessed in a rectilinear motion direction, and the other end bent to form a curved guide groove (464), such that the guide protrusion (550) is guided.

Selectively, the edge protector may further include: a housing protrusion (460) protruding from the inner surface of the housing (450) so as to be inserted into the rod groove (610), in which a distance of the rectilinear motion is defined by the rod groove (610) and the housing protrusion (460).

Selectively, the pin connection portion (620) may be configured to be fitted into the slit (530).

As a third embodiment of the present disclosure, the edge protector may further include: a driving gear (710) connected to the driving motor (430); a driven gear (720) connected to the driving gear (710) and having one side from which a rod link (740) integrally protrudes; and a guide rod (730) having one end rotatably connected to an end of the rod link (740), and the other end connected to the flap (120) and configured to be slidable inside a housing (750).

The present disclosure may also be achieved by a vehicle including the above-mentioned edge protector.

The above-mentioned object of the present disclosure may also be achieved by a method of operating the edge protector, as another category, the method including: step S100 of detecting, by a closure sensor (410), an opening angle or a displacement of a closure; step S120 of detecting, by a controller (420), opening of the closure; step S140 of determining, by the controller (420), an increase or decrease in opening angle or displacement when the opening of the closure is detected; step S160 of controlling, by the controller (420), a driving motor (430) to deploy the flap 120 when the opening angle or displacement increases; and step S180 of controlling, by the controller (420), the driving motor (430) to return the flap 120 when the opening angle or displacement decreases.

According to the embodiment of the present disclosure, a minimum number of components is manufactured by plastic injection molding, such that the internal structure may be simplified, the assembly process may be facilitated, and manufacturing costs may be reduced. In addition, high durability may be exhibited even in case that the door is repeatedly opened or closed.

However, the effects capable of being obtained by the present disclosure are not limited to the aforementioned effects, and other effects, which are not mentioned above, will be clearly understood by those skilled in the art from the following description.

The effects of the present disclosure are not limited to the aforementioned effects, and other effects, which are not mentioned above, will be apparently understood to a person having ordinary skill in the art from the following description.

The objects to be achieved by the present disclosure, the means for achieving the objects, and the effects of the present disclosure described above do not specify essential features of the claims, and, thus, the scope of the claims is not limited to the disclosure of the present disclosure.

### BRIEF DESCRIPTION OF DRAWINGS

The following drawings attached to the present specification illustrate exemplary embodiments of the present disclosure and serve to further understand the technical spirit of the present disclosure together with the following detailed description of the present disclosure, and the present disclosure should not be interpreted as being limited to the items illustrated in the drawings.

The above and other aspects, features and other advantages of the present disclosure will be more clearly understood from the following detailed description taken in conjunction with the accompanying drawings, in which:
FIG. 1 is a view illustrating examples of general structures of an edge protector 30 and a flap 40 of a vehicle door 60 in the related art;
FIG. 2 is a view simply illustrating a connected state between the edge protector 30 and the flap 40 illustrated in FIG. 1;
FIG. 3 is a view illustrating a state in which an edge protector for a vehicle closure according to a first embodiment of the present disclosure is assembled to a door 60;
FIG. 4 is an exploded perspective view of a protector 100 illustrated in FIG. 3;
FIG. 5 is a perspective view of a bell crank 150 in FIG. 4;
FIG. 6 is a perspective view of a link 180 in FIG. 4;
FIG. 7 is a perspective view illustrating an interior of the protector 100 illustrated in FIG. 4 (returned state);
FIG. 8 is a perspective view (deployed state) illustrating the interior of the protector 100 illustrated in FIG. 4;
FIG. 9 is a top plan view of FIG. 8 (deployed state);
FIG. 10 is a schematic overall block diagram of an edge protector according to a second embodiment of the present disclosure;
FIG. 11 is a perspective view (returned state) illustrating an interior of an edge protector 400 according to the second embodiment illustrated in FIG. 10;
FIG. 12 is an exploded perspective view illustrating a guide rod 500 and a pin 560 in FIG. 11;
FIG. 13 is a perspective view of a rod operation part 600 in FIG. 11;
FIG. 14 is a perspective view illustrating an interior of a housing 450 in FIG. 11;
FIG. 15 is a perspective view of an edge protector 700 according to a third embodiment of the present disclosure; and
FIG. 16 is a flowchart schematically illustrating a method of operating the edge protector according to the second embodiment of the present disclosure.

### DETAILED DESCRIPTION OF THE EMBODIMENT

Hereinafter, the exemplary embodiment of the present disclosure will be described with reference to the accompanying drawings and exemplary embodiments as follows. Scales of components illustrated in the accompanying drawings are different from the real scales for the purpose of description, so that the scales are not limited to those illustrated in the drawings.

Hereinafter, an embodiment of the present disclosure will be described in detail with reference to the accompanying drawings so that those skilled in the technical field to which the present disclosure pertains may easily carry out the embodiment. However, the description of the present disclosure is merely embodiments for structural or functional description, and the scope of the present disclosure should not be construed as being limited by the embodiments described in the specification. That is, the embodiments may be variously changed and have various forms, and it should be understood that the scope of the present disclosure includes equivalents capable of realizing the technical spirit. In addition, it does not mean that a specific embodiment should include all of the object or effect provided in the present disclosure or only such effects, and the scope of the present disclosure should not be construed as being limited thereby.

The meaning of terms described in the present disclosure should be understood as follows.

Terms such as "first" and "second" are used to distinguish one component from another, and the scope of rights should not be limited by the terms. For example, a first element may be named a second element, and similarly, the second element may be named the first element. When one constituent element is described as being "coupled" or "connected" to another constituent element, it should be understood that one constituent element may be coupled or connected directly to another constituent element, and an intervening constituent element may also be present between the constituent elements. When one constituent element is described as being "coupled directly to" or "connected directly to" another constituent element it should be understood that no intervening constituent element is present between the constituent elements. Meanwhile, other expressions, that is, "between" and "just between" or "adjacent to" and "directly adjacent to", for explaining a relationship between constituent elements, should be interpreted in a similar manner.

It should be understood that singular expressions include plural expressions unless clearly described as different meanings in the context. **It** should be understood that the terms "comprises," "comprising," "includes," "including," "containing," "has," "having" or other variations thereof are inclusive and therefore specify the presence of stated features, integers, steps, operations, elements, components, and/or combinations thereof, but do not preclude the presence or addition of one or more other features, integers, steps, operations, elements, components, and/or combinations thereof.

Unless defined otherwise, all terms used herein have the same meaning as commonly understood by one of ordinary skill in the art to which the present disclosure belongs. The terms such as those defined in commonly used dictionaries should be interpreted as having meanings consistent with meanings in the context of related technologies and should not be interpreted as ideal or excessively formal meanings unless explicitly defined in the present disclosure.

### CONFIGURATION OF FIRST EMBODIMENT

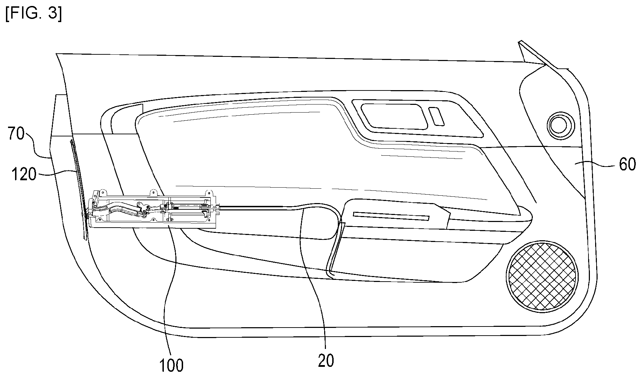

Hereinafter, a configuration of a first exemplary embodiment will be described in detail with reference to the accompanying drawings. Vehicle closures of the present disclosure include a hinge door, a sliding door, and a tail gate of a vehicle. In the present embodiment, the description will be focused on a hinge door 60. FIG. 3 is a view illustrating a state in which an edge protector according to the first embodiment of the present disclosure is assembled to the door 60. As illustrated in FIG. 3, the protector 100 is installed in a horizontal direction between an inner panel and an outer panel of the door 60. A flap 120 is provided in a region of an edge 70 of the door 60 and exposed along the edge 70.

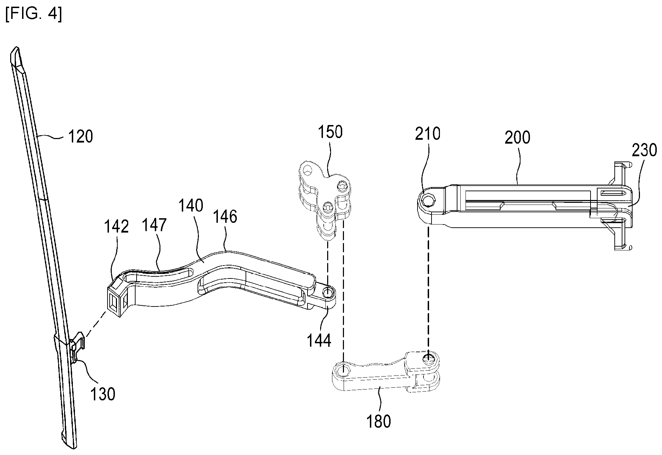

FIG. 4 is an exploded perspective view of a protector 100 illustrated in FIG. 3. As illustrated in FIG. 4, the protector 100 broadly includes the flap 120, a traction tool 140, a bell crank 150, a link 180, and a wire operation part 200.

The flap 120 is a longitudinal member formed to surround a part of the edge 70, and a longitudinal cross-section of the flap 120 has a concave-convex portion or a curved portion so that the edge 70 may be tightly attached to the flap 120 or the edge 70 may be inserted into the flap 120. The flap 120 may be formed by injection-molding a lightweight synthetic resin material. The flap 120 is a consumable component that may be easily replaced in case that the flap 120 is deformed or damaged. A flap protruding portion 130 integrally protrudes from the flap 120. The flap protruding portion 130 includes a hook shape and is separably assembled to a hook groove formed in a head 142 of the traction tool 140. Various assembly methods, such as interference-fitting or pin-coupling, may be applied to the flap protruding portion 130 and the head 142.

The protector 100 is a longitudinal member having a length larger than a width and a height. The protector 100 allows the traction tool 140 to protrude (be deployed) or return when a wire 20 connected to one end of the protector 100 is pushed or pulled. The protector 100 has a rectangular parallelepiped shape, and the flap 120 is assembled to the other end of the protector 100 by a hook or a clip.

The traction tool 140 is provided in the protector 100 and assembled between the flap 120 and the wire operation part 200 in a linked manner. The traction tool 140 is a longitudinal member formed in a longitudinal direction of the protector 100, and a longitudinal cross-section of the traction tool 140 has a rectangular shape. The head 142 is formed integrally with one end of the traction tool 140 and assembled with the flap 120, and a first connection portion 144, which is provided in the form of a through-hole, is formed at the other end of the traction tool 140.

The traction tool 140 has a first bent portion 146 formed between the first connection portion 144 and the head 142 of the traction tool 140 and configured to define an obtuse angle (e.g., 120° to 150°), and a second bent portion 147 formed continuously from the first bent portion 146 in a reverse direction and configured to define another obtuse angle (e.g., 120° to 150°). The first and second bent portions 146 and 147 guide the flap 120 so that the flap 120 performs a curved motion (or a turning motion or a bending motion). The traction tool 140 may be manufactured by injection-molding a synthetic resin material or manufactured by metal processing.

The traction tool 140 protrudes from the protector 100 in the longitudinal direction of the protector 100 when the door 60 is about to be opened, and the traction tool 140 returns into the protector 100 when the door 60 is about to be closed. The traction tool 140 serves to convert a rectilinear motion of the wire operation part 200 into a rectilinear motion and a curved motion of the flap 120. The curved motion moves the flap 120 along a curved trajectory, such that the flap 120 may surround the edge 70 or the flap 120 may move to the outside of the edge 70.

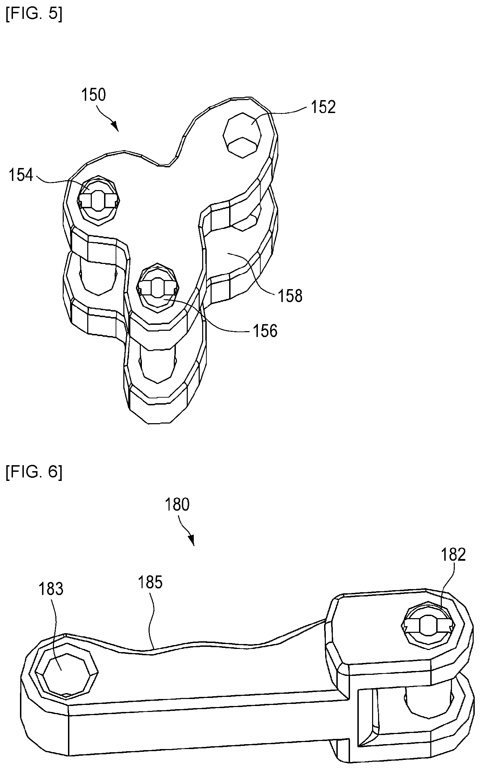

FIG. 5 is a perspective view of the bell crank 150 in FIG. 4. As illustrated in FIG. 5, the bell crank 150 is a link having an approximately dual triangular shape, and the traction tool 140 and the link 180 are connected to the bell crank 150. The bell crank 150 is configured to rotate about a rotation center portion 152. The rotation center portion 152 is formed in a central region of the bell crank 150, and a housing protrusion 310 is inserted into the rotation center portion 152 and serves as a rotation center of the bell crank 150.

A traction tool connection portion 154 and a link connection portion 156 are formed to be adjacent to a radially outer side of the rotation center portion 152, and a link accommodation groove 158 is formed in a common side surface of the link connection portion 156 and the rotation center portion 152. A middle region of the link 180 is fitted with the link accommodation groove 158.

FIG. 6 is a perspective view of the link 180 in FIG. 4. As illustrated in FIGS. 4 and 6, the link 180 is a longitudinal member connected between the wire operation part 200 and the bell crank 150. A first link connection portion 182 connected to a second connection portion 210 is formed at one end of the link 180, and a second link connection portion 183 connected to the link connection portion 156 is formed at the other end of the link 180.

The remaining portion of the link 180 (including the second link connection portion), which excludes the first link connection portion 182, may be inserted into the link accommodation groove 158 or detached after being inserted. The link 180 may further be formed with a link groove 185 formed between the first link connection portion 182 and the second link connection portion 183 so that the link 180 may be more deeply inserted into the link accommodation groove 158. The link groove 185 has a wave shape or a circular arc shape recessed to be consistent in shape with a shape of a lateral surface of the link accommodation groove 158.

As illustrated in FIG. 4, the wire operation part 200 is provided in the protector 100 and assembled to one end of the link 180 in a linked manner so that the wire operation part 200 rotates relatively. The wire operation part 200 rectilinearly reciprocates inside the protector 100 while pushing or pulling the wire 20. A wire fixing portion 230, to which the wire 20 is connected, is formed at one end of the wire operation part 200, and the second connection portion 210, which is provided in the form of a through-hole, is formed at the other end of the wire operation part 200. The wire operation part 200 may be manufactured by injection-molding a synthetic resin material or manufactured by metal processing.

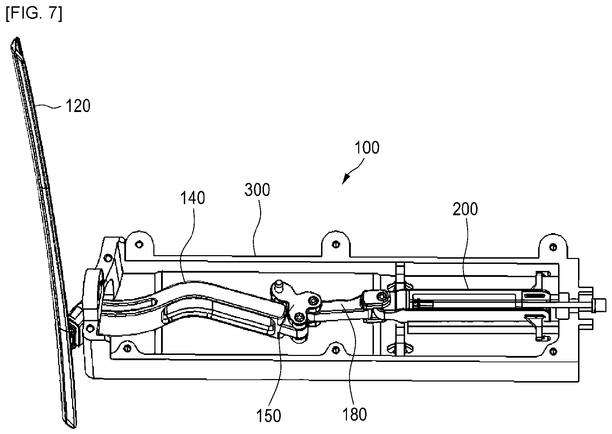

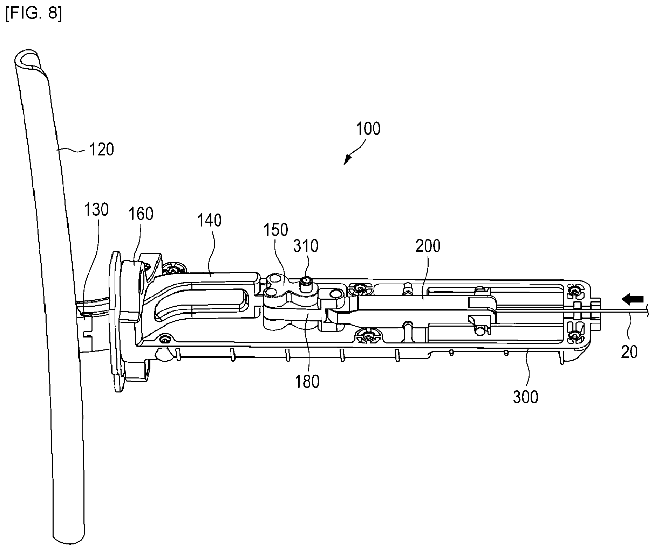

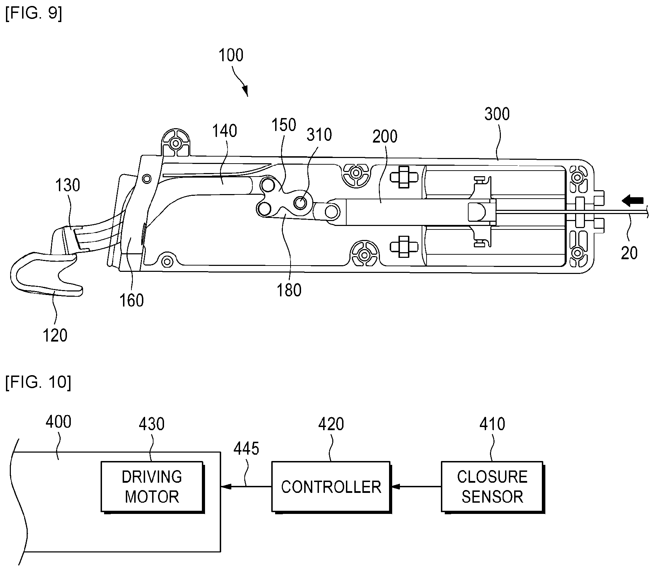

FIG. 7 is a perspective view (returned state) illustrating an interior of the protector 100 illustrated in FIG. 4, FIG. 8 is a perspective view (deployed state) illustrating the interior of the protector 100 illustrated in FIG. 4, and FIG. 9 is a top plan view (deployed state) of FIG. 8. As illustrated in FIGS. 7 to 9, a housing 300 is manufactured as a pair of housings, and the traction tool 140, the bell crank 150, the link 180, and the wire operation part 200 are accommodated in the housing 300. The wire 20 passes through one end of the housing 300, and the head 142 passes through the other end of the housing 300.

The housing protrusion 310 is formed on an inner surface of the housing 300, and the housing protrusion 310 protrudes from the inner surface of the housing 300 and is rotatably inserted into the rotation center portion 152. Further, a flange 160 integrally protrudes from the housing 300 to fix the housing 300 to the door 60.

### OPERATION OF FIRST EMBODIMENT

Hereinafter, an operation of the first exemplary embodiment will be described in detail with reference to the accompanying drawings. In an initial state (returned state) illustrated in FIG. 6, when the door 60 is about to be opened, the actuator 10 pushes the wire 20 by using a force for opening the door 60. Then, the head 142 protrudes to the outside of the housing 300 as the wire operation part 200 and the traction tool 140 are pushed by the wire 20. In this case, the flap 120, together with the head 142, protrudes to the outside of the edge 70.

More specifically, the wire operation part 200 is rectilinearly moved by a pushing operation of the wire 20. Then, the link 180 rectilinearly moves to rotate the bell crank 150 about the rotation center portion 152. In this case, the first connection portion 144 of the traction tool 140 is pushed while being rotated, such that the flap 120 protrudes in the longitudinal direction of the door 60 slightly further than the edge 70.

Next, when the door 60 is opened further, the wire operation part 200 rectilinearly moves, and the link 180 rotates the bell crank 150 further while entering the link accommodation groove 158. With reference to FIGS. 8 and 9, when the traction tool 140 is aligned in the longitudinal direction, as illustrated in FIG. 8, the flap 120 is positioned to protrude in a thickness direction of the door 60 further than the edge 70. Therefore, in case that a vehicle is parked nearby, the flap 120 comes into contact with the adjacent parked vehicle before the edge 70 of the door 60 comes into contact with the adjacent parked vehicle. Therefore, it is possible to prevent damage to the edge 70 or damage to the adjacent parked vehicle.

Thereafter, when the door 60 is about to be closed, the actuator 10 pulls the wire 20 by using a force for closing the door 60. The head 142 enters the housing 300 as the wire operation part 200 and the traction tool 140 are pulled by the wire 20. In this case, the flap 120, together with the head 142, returns into the door 60.

More specifically, the wire operation part 200 is rectilinearly moved by a pulling operation of the wire 20. Further, the link 180 exits the link accommodation groove 158 while rotating the bell crank 150 counterclockwise (based on FIG. 8). In this case, the flap 120 is retracted in the thickness direction of the door 60.

Next, when the door 60 is further closed or completely closed, the wire operation part 200 rectilinearly moves, and the link 180 rotates the bell crank 150, as illustrated in FIG. 7. As a result, the flap 120 returns to an initial position.

### CONFIGURATION OF SECOND EMBODIMENT

Hereinafter, a configuration of a second exemplary embodiment will be described in detail with reference to the accompanying drawings. FIG. 10 is a schematic overall block diagram of an edge protector according to a second embodiment of the present disclosure. As illustrated in FIG. 10, a closure sensor 410 detects whether the door 60 is opened or closed. The closure sensor 410 may detect an opening angle or an opening displacement of the door 60. To this end, the closure sensor 410 may be a rotation angle sensor or a displacement sensor installed in a hinge region (not illustrated) of the door 60. The closure sensor 410 may selectively be an on/off sensor configured to detect only whether the door 60 is opened or closed. An output signal of the closure sensor 410 is transmitted to a controller 420.

The controller 420 controls a driving motor 430 based on the output signal of the closure sensor 410. The controller 420 may be an engine control unit (ECU), a microcomputer, a CPU, or the like installed in the vehicle.

The driving motor 430 receives a command (e.g., driving signal and/or driving electric power) of the controller 420 through an electric line 445 and operates a protector 400 while operating in response to the command. The driving motor 430 is embedded in the protector 400. Selectively, the driving motor 430 may be installed outside the protector 400 so as to adjoin the protector 400. The driving motor 430 may be a forward/reverse motor, a servo motor, a linear motor, a linear servo motor, or the like that rotates at a constant speed. As necessary, in order to convert a rotational motion of the driving motor 430 into a rectilinear motion, a rack and a pinion 440 may further be included, or a speed reducer, such as a worm gear, may further be included.

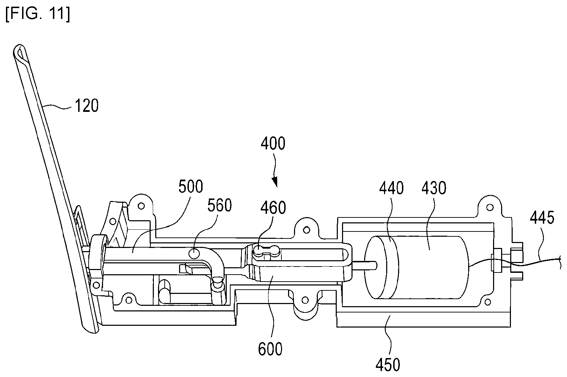

FIG. 11 is a perspective view (returned state) illustrating an interior of the edge protector 400 according to the second embodiment illustrated in FIG. 10. As illustrated in FIG. 11, the protector 400 is a longitudinal member having a length larger than a width and a height, and the protector 400 has a housing 450 made of plastic. The driving motor 430 is embedded at one end of the inside of the protector 400, and a rod operation part 600 rectilinearly reciprocates in the rotation direction of the driving motor 430. A guide rod 500, which is connected to the rod operation part 600 by a pin 560, protrudes (extends) to the outside of the housing 450 or returns (retracts). Therefore, the flap 120 assembled to the end of the guide rod 500 is deployed or returned.

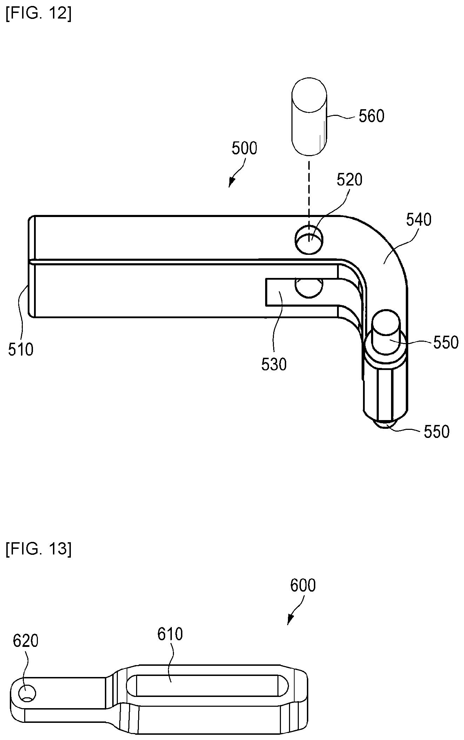

FIG. 12 is an exploded perspective view illustrating the guide rod 500 and the pin 560 in FIG. 11. As illustrated in FIG. 12, the guide rod 500 is a longitudinal member formed in the longitudinal direction of the protector 400, and a longitudinal cross-section of the guide rod 500 has a rectangular shape. An exposed end of the guide rod 500 is a head 510, and the head 510 is assembled to the flap 120.

A middle region of the guide rod 500 is bent at 90° and forms a bent portion 540. A pair of guide protrusions 550 protrude in an upward/downward direction from one end of the guide rod 500, and the guide protrusion 550 slides in a guide groove 466 and a curved guide groove 464.

Pin holes 520 are formed in a middle region of the guide rod 500. The pin holes 520 are provided as a pair of through-holes formed in a vertical direction. A slit 530 is formed between the pair of pin holes 520.

The slit 530 is formed through a lateral surface of the guide rod 500 in a lateral surface region of the guide rod 500 from the pin hole 520 to the bent portion 540 adjacent to the guide protrusion 550. That is, the slit 530 also has a curved shape in accordance with a curved shape of the bent portion 540. The other end of the rod operation part 600 reciprocates inside the slit 530.

The guide rod 500 is provided in the protector 400 and assembled between the flap 120 and the rod operation part 600 in a linked manner. The head 510 of the guide rod 500 is extended from the protector 400 in the longitudinal direction of the protector 400 when the door 60 is about to be opened, and the head 510 of the guide rod 500 returns into the protector 400 when the door 60 is about to be closed. The guide rod 500 serves to convert a rectilinear motion of the rod operation part 600 into a rectilinear motion and a curved motion (or turning motion) of the flap 120. The curved motion moves the flap 120 along a curved trajectory, such that the flap 120 may surround the edge 70 or the flap 120 may move to the outside of the edge 70.

FIG. 13 is a perspective view of the rod operation part 600 in FIG. 11. As illustrated in FIG. 13, one end of the rod operation part 600 is mechanically connected to the driving motor 430. In case that the driving motor 430 is a forward/reverse motor, the rack and the pinion 440 are further provided to convert a rotational motion into a rectilinear motion. The rod operation part 600 may be manufactured by injection-molding a synthetic resin material or manufactured by metal processing.

The other end of the rod operation part 600 forms a pin connection portion 620. The pin connection portion 620 is assembled in the protector 400 by the pin 560 so as to be rotatable relative to the middle region of the guide rod 500. The rod operation part 600 rectilinearly reciprocates inside the protector 400 in accordance with a forward/reverse rotation of the driving motor 430.

A rod groove 610 is a hole formed through the rod operation part 600 and having a slit shape, and a housing protrusion 460 is inserted into the rod groove 610. Therefore, the rod operation part 600 rectilinearly reciprocates while being restrained by the housing protrusion 460.

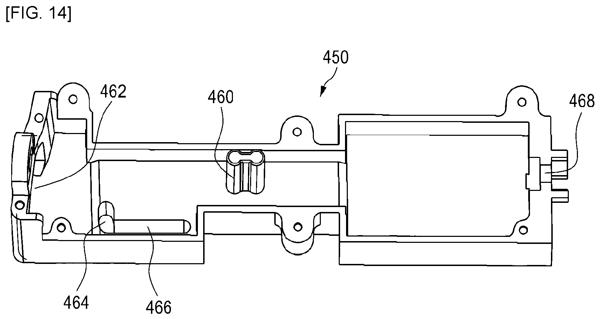

FIG. 14 is a perspective view illustrating an interior of the housing 450 in FIG. 11. As illustrated in FIG. 14, the housing 450 is provided as a pair of housings 450 that are disassembled or assembled. The housing 450 accommodates therein the rod operation part 600, the guide rod 500, and the pin 560. The electric line 445 passes through one end of the housing 450, and a head through-hole 462, through which the head 510 passes, is formed at the other end of the housing 450.

The guide groove 466 is formed in an inner surface of the housing 450 and formed between the housing protrusion 460 and the head through-hole 462. One end of the guide groove 466 is recessed in a rectilinear motion direction, and the other end of the guide groove 466 is curved at 90 degrees to form the curved guide groove 464, such that the guide groove 466 guides the guide protrusion 550.

The curved guide groove 464 is shorter in length than the guide groove 466. The curved guide groove 464 guides the turning motion of the flap 120. The curved guide groove 464 may have a curved shape, an arc shape, or a partially elliptical shape.

### OPERATION OF SECOND EMBODIMENT

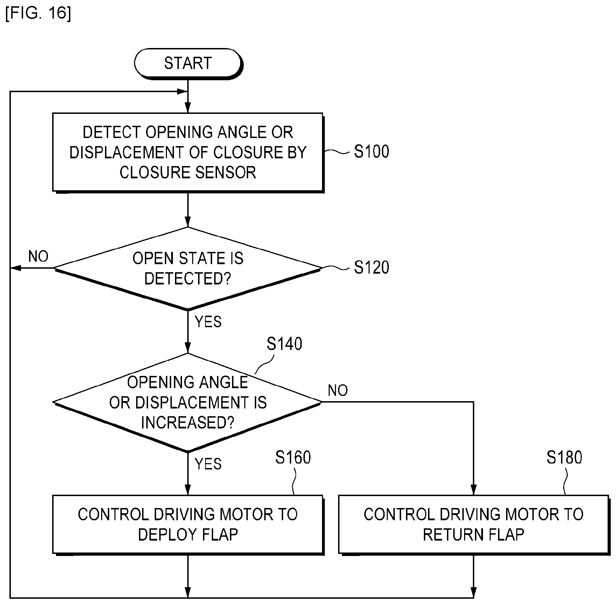

Hereinafter, an operation of the second exemplary embodiment will be described in detail with reference to the accompanying drawings. FIG. 16 is a flowchart schematically illustrating a method of operating the edge protector according to the second embodiment of the present disclosure. As illustrated in FIG. 16, the closure sensor 410 detects an opening angle or an opening displacement of the door 60 (S100). The closure sensor 410 detects, in real time, whether the door 60 is opened or closed and an opening angle of the door 60 and transmits the detection result to the controller 420.

Next, based on the received opening angle or the received opening displacement, the controller 420 determines whether the door 60 is in an open state (S120).

When the closure 60 is about to be opened, the controller 420 determines an increase or decrease in opening angle or opening displacement (S140). This may be used to determine whether an occupant intends to open the door 60 and board the vehicle or alight from the vehicle. The increase in opening angle refers to a situation in which the opening angle of the door 60 changes in an increasing direction (e.g., 35°, 40°, 45°, 50°, etc.) from 30°. The decrease in opening angle refers to a situation in which the opening angle of the door 60 changes in a decreasing direction (e.g., 40°, 38°, 35°, etc.) from 45°, at which the door 60 is opened, for example. The opening displacement may correspond to a sliding door.

In case that the opening angle or the opening displacement increases, the controller 420 controls the driving motor 430 to deploy the flap 120 (S160). That is, the driving motor 430 rotates in a first direction to extend the guide rod 500, such that the flap 120 is deployed. This is because it is determined that a driver performs an operation of opening the closure 60.

More specifically, the rod operation part 600 is rectilinearly moved by the rotation of the driving motor 430. Further, the guide rod 500 connected to the pin 560 rectilinearly moves as the guide protrusion 550 moves along the guide groove 466. As a result, the flap 120 protrudes in the longitudinal direction of the door 60 slightly further than the edge 70.

Next, the door 60 is opened further, and the rod operation part 600 rectilinearly moves, whereas the guide rod 500 performs the curved motion (turning motion). That is, the guide rod 500 rotates about the pin 560 as the guide protrusion 550 moves from the guide groove 466 to the curved guide groove 464.

As a result, the flap 120 protrudes in the thickness direction of the door 60 further than the edge 70 and is positioned. In case that a vehicle is parked nearby, the flap 120 comes into contact with the adjacent parked vehicle before the edge 70 of the door 60 comes into contact with the adjacent parked vehicle. Therefore, it is possible to prevent damage to the edge 70 or damage to the adjacent parked vehicle.

In case that the opening angle or the opening displacement decreases, the controller 420 controls the driving motor 430 to return the flap 120 (S180). That is, the driving motor 430 rotates in a direction reverse to the first direction, such that the rod operation part 600 rectilinearly returns. In this case, the guide rod 500 performs a reverse turning motion along the curved guide groove 464. As a result, the flap 120 moves along a smooth curved trajectory from the outside of the edge 70 to the inside of the door 60.

Next, when the door 60 is closed slightly further, the guide rod 500 rectilinearly moves along the guide groove 466, and the flap 120 returns to the initial position.

### THIRD EMBODIMENT

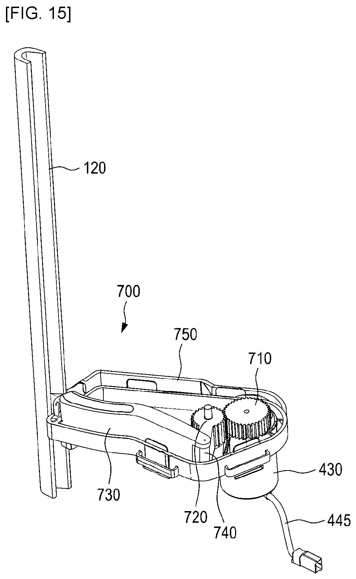

Hereinafter, a configuration and an operation of a third exemplary embodiment will be described in detail with reference to the accompanying drawings. FIG. 15 is a perspective view of an edge protector 700 according to the third embodiment of the present disclosure. As illustrated in FIG. 15, the driving motor 430 may be assembled outside a housing 750. A driving gear 710 is assembled to the driving motor 430 and configured to rotate. A driven gear 720 is connected to the driving gear 710, and a rod link 740 integrally protrudes in a radial direction. Therefore, the rod link 740 turns in accordance with a rotation of the driven gear 720.

One end of a guide rod 730 is rotatably connected to an end of the rod link 740 by a link. The other end of the guide rod 730 may be connected to the flap 120 and slide inside the housing 750.

Therefore, in case that the driving motor 430 rotates forward, the rod link 740 turns in accordance with the rotation of the driven gear 720. The other end of the guide rod 730 is allowed to protrude to the outside of the housing 750 by the rod link 740. In case that the driving motor 430 rotates reversely, the rod link 740 turns reversely in accordance with the reverse rotation of the driven gear 720. The other end of the guide rod 730 is accommodated in the housing 750 by the rod link 740. The flap 120 is deployed or returned as the guide rod 730 protrudes or is accommodated.

The detailed description of the exemplary embodiments of the present disclosure as described above has been provided to enable those skilled in the art to implement and carry out the present disclosure. While the present disclosure has been described above with reference to the exemplary embodiments, it may be understood by those skilled in the art that the present disclosure may be variously modified and changed without departing from the scope of the present disclosure. For example, those skilled in the art may use the components disclosed in the above-mentioned embodiments by combining the components. Therefore, the present disclosure is not limited to the embodiments disclosed herein but intended to provide the widest scope consistent with the principles and novel features disclosed herein.

The present disclosure may be specified as other specific forms without departing from the spirit and the essential features of the present disclosure. Therefore, it should be appreciated that the detailed description is interpreted as being illustrative in every sense, not restrictive. The scope of the present disclosure should be determined based on the reasonable interpretation of the appended claims, and all of the modifications within the equivalent scope of the present disclosure belong to the scope of the present disclosure. The present disclosure is not limited to the embodiments disclosed herein but intended to provide the widest scope consistent with the principles and novel features disclosed herein. In addition, the embodiments may be configured or new claims may be added by amendments after filing the application by combining claims that do not have explicit relationships therebetween.

## Claims

1. An edge protector for a vehicle closure, the edge protector comprising:
a wire operation part (200) having one end to which a wire (20) for traction is connected, and the other end at which a second connection portion (210) is formed, the wire operation part (200) being configured to perform a rectilinear reciprocation;
a link (180) having one end configured to form a first link connection portion (182) connected to the second connection portion (210), and the other end configured to form a second link connection portion (183) connected to a link connection portion (156);
a bell crank (150) having a rotation center portion (152), having a traction tool connection portion (154) and the link connection portion (156) formed at a radially outer side of the rotation center portion 152, and having a lateral surface in which a link accommodation groove (158) is formed;
a traction tool (140) having one end at which a first connection portion (144) connected to the traction tool connection portion (154) is formed, and the other end at which a head (142) is formed, the traction tool (140) being configured to protrude from a housing (300) when the vehicle closure is opened and configured to return into the housing (300) when the closure is closed;
a flap (120) connected to the head (142) and configured to surround a part of an edge (70) of the closure when the traction tool (140) protrudes; and
a housing (300) configured to accommodate therein the wire operation part (200) and the traction tool (140) and having a housing protrusion (310) protruding from an inner surface of the housing (300) and configured to be rotatably inserted into the rotation center portion (152).

2. The edge protector of claim 1, wherein the link (180) is configured to be inserted into the link accommodation groove (158).

3. The edge protector of claim 2, wherein the link (180) further comprises a link groove (185) recessed between the first link connection portion (182) and the second link connection portion (183) so that the link (180) is inserted into the link accommodation groove (158).

4. The edge protector of claim 1, wherein the traction tool (140) comprises:
a first bent portion (146) configured to define an obtuse angle between the first connection portion (144) and the head (142); and
a second bent portion (147) configured to define another obtuse angle in a direction reverse to the first bent portion (146).

5. The edge protector of claim 1, further comprising:
a flap protruding portion (130) integrally protruding from the flap (120) and assembled to the head (142),
wherein the flap protruding portion (130) and the head (142) are separably hook-coupled.

6. An edge protector for a vehicle closure, the edge protector comprising:
a closure sensor (410) configured to detect whether a vehicle closure is opened or closed;
a driving motor (430) configured to operate the flap (120) configured to protect an edge of the closure; and
a controller (420) configured to control the driving motor (430) based on an output signal of the closure sensor (410).

7. The edge protector of claim 6, wherein the closure sensor (410) detects an opening angle of the closure.

8. The edge protector of claim 6, wherein the driving motor (430) is a linear motor or further comprises a rack and a pinion to convert a rotational motion of the driving motor (430) into a rectilinear motion.

9. The edge protector of claim 6, further comprising:
a rod operation part (600) having one end to which the driving motor (430) is connected, the other end at which a pin connection portion (620) is formed, and a middle portion in which a rod groove (610) is formed, the rod operation part (600) being configured to perform a rectilinear reciprocation;
a guide rod (500) having one end bent to form a bent portion (540), a guide protrusion (550) formed at one end of the bent portion (540), the other end at which a head (510) to which the flap (120) is connected is provided, a middle region in which a pin hole (520) is formed, and a slit (530) formed from the pin hole (520) to the bent portion (540);
a pin (560) fitted in common into the pin hole (520) and the pin connection portion (620);
a housing (450) configured to accommodate therein the rod operation part (600), the guide rod (500), and the pin (560); and
a guide groove (466) formed in an inner surface of the housing (450) and having one end recessed in a rectilinear motion direction, and the other end bent to form a curved guide groove (464), such that the guide protrusion (550) is guided.

10. The edge protector of claim 9, further comprising:
a housing protrusion (460) protruding from the inner surface of the housing (450) so as to be inserted into the rod groove (610),
wherein a distance of the rectilinear motion is defined by the rod groove (610) and the housing protrusion (460).

11. The edge protector of claim 9, wherein the pin connection portion (620) is configured to be inserted into the slit (530).

12. The edge protector of claim 6, further comprising:
a driving gear (710) connected to the driving motor (430);
a driven gear (720) connected to the driving gear (710) and having one side from which a rod link (740) integrally protrudes; and
a guide rod (730) having one end rotatably connected to an end of the rod link (740), and the other end connected to the flap (120) and configured to be slidable inside a housing (750).

13. A vehicle comprising the edge protector according to any one of claims 6 to 12.

14. A method of operating the edge protector according to any one of claims 6 to 12, the method comprising:
step S100 of detecting, by a closure sensor (410), an opening angle or a displacement of a closure;
step S120 of detecting, by a controller (420), opening of the closure;
step S140 of determining, by the controller (420), an increase or decrease in opening angle or displacement when the opening of the closure is detected;
step S160 of controlling, by the controller (420), a driving motor (430) to deploy the flap 120 when the opening angle or displacement increases; and
step S180 of controlling, by the controller (420), the driving motor (430) to return the flap 120 when the opening angle or displacement decreases.
